(19) Europäisches Patentamt
European Patent Office
Office européen des brevets

(11) EP 0 542 973 B1

(12) **FASCICULE DE BREVET EUROPEEN**

(45) Date de publication et mention de la délivrance du brevet: **17.01.1996 Bulletin 1996/03**

(21) Numéro de dépôt: **92912285.1**

(22) Date de dépôt: **10.06.1992**

(51) Int. Cl.$^6$: **A01N 43/80**

(86) Numéro de dépôt international: **PCT/FR92/00520**

(87) Numéro de publication internationale: **WO 92/22204 (23.12.1992 Gazette 1992/32)**

(54) **COMPOSITION PHYTOSANITAIRE, SON PROCEDE DE PREPARATION ET SON UTILISATION, EN PARTICULIER POUR LUTTER CONTRE LES MAUVAISES HERBES**

PFLANZENSCHUTZMITTEL, VERFAHREN ZU SEINER HERSTELLUNG UND SEIN GEBRAUCH, INSBESONDERE ZUR UNKRAUTBEKÄMPFUNG

PHYTOSANITARY COMPOSITION, METHOD OF PREPARING THE SAME AND USE THEREOF ESPECIALLY FOR COMBATTING WEEDS

(84) Etats contractants désignés:
**AT BE CH DE DK ES FR GB GR IT LI LU MC NL SE**

(30) Priorité: **10.06.1991 FR 9107012**

(43) Date de publication de la demande: **26.05.1993 Bulletin 1993/21**

(73) Titulaire: **Roquette Frères**
**F-62136 Lestrem (FR)**

(72) Inventeurs:
- **GOSSET, Serge**
  **F-62136 Lestrem (FR)**
- **GAUVRIT, Christian**
  **F-21000 Dijon (FR)**

(74) Mandataire: **Ahner, Francis**
**F-75116 Paris (FR)**

(56) Documents cités:
**EP-A- 0 049 071** **GB-A- 2 162 529**

- **CHEMICAL PATENTS INDEX, BASIC ABSTRACTS JOURNAL Section Ch, Week 8820, 13 Juillet 1988 Derwent Publications Ltd., London, GB; Class C, AN 137240/20**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Rank Xerox (UK) Business Services
2.9.5/3.4

## Description

La présente invention concerne, en tant que produits industriels nouveaux, des compositions phytosanitaires à base de composé(s) benzamidique(s) et de cyclodextrine(s), utiles notamment pour la protection des plantes contre les espèces végétales indésirables.

Elle a également pour objet un procédé de préparation desdites compositions et leur utilisation, en post- et/ou prélevée des plantes à protéger.

Enfin, la présente invention concerne tout particulièrement la préparation de compositions phytosanitaires contenant, en tant que composé benzamidique à vocation herbicide, du N-[3-(1-éthyl-1-méthylpropyl)-5-isoxazolyl]-2,6-diméthoxybenzamide, également connu sous l'appellation "Isoxaben", et leur utilisation en vue de la protection des cultures, notamment céréalières.

Par "plantes", on entend notamment toutes les espèces végétales cultivées par l'homme, en particulier celles destinées à son alimentation ou celle de l'animal (céréales, cultures fourragères, légumières, fruitières, vigne, etc.), et/ou à la fourniture de bois de toutes destinations (chauffage, construction d'habitations, de meubles, etc.) et/ou à l'ornementation (cultures forestières, ornementales, florales, gazon, etc.).

Par "espèces végétales indésirables", on entend celles qui jouent défavorablement sur la ou les utilisations visées des plantes cultivées et en particulier celles dont la présence nuit de façon qualitative et/ou quantitative, à la croissance et/ou à la récolte de tout ou partie des plantes cultivées.

Cette définition inclut toutes les espèces végétales qualifiées, dans le langage courant, de "mauvaises herbes", notamment celles appartenant à la classe des dicotylédones.

Il a déjà été préconisé dans un article de SZEJTLI de traiter, en particulier par trempage, des semences de plantes cultivées avec des solutions de dextrines linéaires et/ou cycliques (cyclodextrines) en vue de retarder la germination desdites semences.

La croissance des pousses serait ainsi stimulée et les plantes se révèleraient moins sensibles à la phytotoxicité d'herbicides mis en oeuvre ultérieurement ("physiological effects of cyclodextrins in plants" - die Starke, 35 (1983), Nr 12, S-433-438).

Il est dit dans cet article que cet effet "antidote" peut permettre d'abaisser la sensibilité des plantes cultivées à certains herbicides ("Dicuran", "Afalon" et "Hungazin") mais n'influence pas l'efficacité desdits herbicides à l'encontre des mauvaises herbes.

Il a été par ailleurs décrit au niveau du brevet belge BE n° 902.613, la préparation et l'utilisation de complexes à base de béta-cyclodextrine et de dérivés particuliers de benzènesulfonylurée à vocation herbicide.

Il apparaît que les complexes revendiqués, lesquels sont présentés comme améliorant l'efficacité biologique des benzènesulfonylurées, nécessitent la mise en oeuvre obligatoire d'au moins deux moles de béta-cyclodextrine par mole de principe actif.

Il convient de rappeler à cet endroit de la description, que l'une des conditions nécessaires pour qu'un principe actif herbicide soit véritablement efficace réside dans l'aptitude dudit principe actif à atteindre en quantités suffisantes, à l'intérieur du sol, les adventices et/ou les graines de chacune des espèces végétales indésirables auxquelles il est destiné.

A ce titre, certains composés à vocation herbicide voient leurs applications, potentielles ou effectives, réduites du fait qu'ils sont censés ou reconnus être, dans certaines circonstances, inopérants faute notamment d'une mobilité suffisante dans le substrat destiné à supporter la plante à protéger.

Cette mobilité est influencée bien évidemment par la nature chimique intrinsèque de l'herbicide mais également par des facteurs externes liés, entre autres, à la nature physicochimique et à l'humidité du substrat.

JAMET et coll ont par exemple montré que des herbicides tels que les produits connus sous les appellations respectives de "Metamitron" et "Atrazine", présentaient une mobilité différente, exprimée en fonction de la classification à cinq classes de HELLING et TURNER, selon la nature du sol auquel ils étaient appliqués (Bull. Environ. Contam. Toxicol. (1988), 41: 135-142.

Dans ce document, l'Atrazine est classée, à titre d'exemple, comme "immobile" (classe 1) dans certains substrats et "peu mobile" (classe 2) ou "modérément mobile" (classe 3) dans certains autres.

Dans ce même document, JAMET a montré qu'un herbicide benzamidique tel que le N-[3-(1-éthyl-1-méthylpropyl)-5-isoxazolyl]-2,6-diméthoxybenzamide, également connu sous l'appellation "Isoxaben", pouvait être considéré comme parfaitement immobile (classe 1) et ce, indépendamment de la nature du substrat auquel il était appliqué.

L'Isoxaben est plus particulièrement utilisé comme herbicide de prélevée dans le cadre de la protection des céréales d'hiver telles que le blé tendre, blé dur, orge, avoine, triticale ou seigle.

Il est généralement appliqué, à l'automne, par pulvérisation sur le sol (dose moyenne : 125 g/hectare) et bénéficie, dans ce contexte, des pluies jusqu'au printemps ce qui assure sa lente répartition dans la couche superficielle du sol où germent la plupart des mauvaises herbes, notamment des dicotylédones, à éliminer. Il peut ainsi pénétrer dans la graine lors de la phase d'inhibition qui précède la germination.

Or, si ce produit montre régulièrement une réelle efficacité biologique dans le cadre de la protection du blé d'hiver par exemple, il n'en est pas de même quand il s'agit de traiter des cultures qui, comme le maîs, nécessitent un désherbage au mois de mai.

En effet, à cette époque, la pluviosité est très irrégulière d'une année sur l'autre et, en général, faible en comparaison des précipitations d'hiver.

En conséquence, les conditions d'environnement, en particulier au niveau du sol, sont souvent trop sèches pour conférer à l'Isoxaben une bonne efficacité herbicide et notamment une mobilité suffisante lui permettant d'atteindre et de détruire significativement les espèces végétales indésirables.

Il est clair que ce qui vient d'être dit au sujet de l'Isoxaben est susceptible de s'appliquer à tout composé benzamidique à vocation herbicide dont la mobilité et/ou l'efficacité est potentiellement ou effectivement insuffisante dans un tel contexte, notamment ceux de qualifiables d'"immobiles" ou de "peu mobiles" dans le ou les substrat(s) destiné(s) à supporter les cultures visées.

En suite de quoi, de tels principes actifs, en particulier l'Isoxaben, voient leurs utilisations limitées en ce qui concerne leur application à la protection des plantes cultivées dont le désherbage est mis en place de mai à la fin de l'été (maîs par exemple) ou dans des conditions exceptionnelles de faible pluviométrie en automne/hiver.

Il résulte de ce qui précède qu'il existait un besoin de trouver un moyen apte à permettre une utilisation plus large de ces produits, en particulier dans leur emploi en tant qu'herbicides de pré-levée mis en oeuvre à la surface des sols.

Et le mérite de la Société Demanderesse est d'avoir trouvé qu'un tel moyen pouvait consister en l'association, en présence ou non de tiers constituants, d'au moins l'un de ces produits, à savoir un composé benzamidique, et au moins une cyclodextrine, en particulier une béta-cyclodextrine.

Plus précisément, la présente invention a pour objet une composition phytosanitaire, utile notamment pour la protection des plantes contre les espèces végétales indésirables, caractérisée en ce qu'elle contient au moins un composé benzamidique associé à au moins une cyclodextrine de manière à améliorer la mobilité dans le sol et/ou l'efficacité biologique dudit dérivé benzamidique et en ce que le rapport molaire entre cyclodextrine(s) d'une part et composé(s) benzamidique d'autre part est au plus égal à 2/1.

La présente invention revêt un caractère d'autant plus surprenant et inattendu que des investigations visant spécifiquement la simulation sur écran, par modélisation assistée par ordinateur, de systèmes moléculaires entre cyclodextrines et différents principes actifs, ont montré que Isoxaben et béta-cyclodextrine ne pouvaient pas faire l'objet de véritables complexes d'inclusion, contrairement à d'autre principes actifs étudiés (Minutes, 5th Int. Symposium on Cyclodextrins, 28-30 March 1990, p. 101-106).

Fort de cet enseignement, le spécialiste de la formulation de compositions phytosanitaires à composé benzamidique n'était pas enclin à vouloir étudier l'incorporation de cyclodextrines, en particulier de béta-cyclodextrine, dans ces compositions et ce, d'autant plus que celles-ci contiennent généralement, comme il sera détaillé par la suite, d'autres constituants susceptibles d'interagir, d'une façon ou d'une autre, avec lesdites cyclodextrines et de perturber l'efficacité biologique de l'ensemble.

En outre, le mérite de la Société Demanderesse est d'avoir trouvé et ce, après de longues études, que non seulement l'association entre une cyclodextrine et une herbicide benzamidique, y compris en présence de tiers constituants, présentait un réel intérêt en application phytosanitaire, mais encore que cet intérêt se manifestait de la façon la plus avantageuse pour des rapports molaires cyclodextrine / composé benzamidique peu élevés, c'est-à-dire au plus égal à 2/1 et donc significativement inférieurs à ceux rendu obligatoires selon le brevet BE 902.613 susmentionné.

Dans le cadre de la présente invention, on entend par composé benzamidique, tout composé susceptible d'avoir, entre autres fonctions, une fonction herbicide et qui répond à la formule générale ci-après :

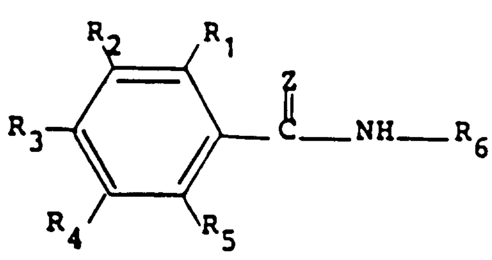

dans laquelle Z est un atome d'oxygène ou de soufre.

Les groupements R1 à R6, qui peuvent être identiques ou différents, sont notamment de type hydrogène, halogène, alcoyle, y compris hydroxy, halogéno ou thio-alcoyle, alcényle, alcoxy, notamment méthoxy ou éthoxy, ou aryle.

En particulier, le terme "aryle" n'est en aucun cas limitatif, notamment dans son application au groupement R6 et la formule générale donnée ci-dessus doit être comprise comme incluant, entre autres, les composés N-arylbenzamidiques décrits dans le brevet EP-B-0 049 071, en particulier de la ligne 17 de la page 1 à la ligne 55 de la page 12.

Cette définition s'applique, à titre d'exemple, aux composés N-arylbenzamidiques susmentionnés pour lesquels leur groupement R6 est donc de type "aryle" et au moins l'un de leurs groupements R1 à R5 est de type alcoxy, de préférence de type méthoxy ou éthoxy.

Dans le cadre de l'invention, on fera tout particulièrement appel, dans cette catégorie de composés N-aryl(alcoxy)benzamidiques, aux produits décrits de la ligne 5 page 11 à la ligne 45 page 12 du brevet EP-B-0 049 071 susmentionné, et notamment à l'Isoxaben, ainsi qu'à leurs sels acceptables en agronomie.

Par le terme "cyclodextrine", on entend tout macrocycle construit à partir de six, sept ou huit motifs glucose et désigné respectivement par alpha, béta ou gamma cyclodextrine, ainsi que tout dérivé de l'un quelconque de ceux-ci. Le terme "dérivé" doit être compris comme comprenant tout macrocycle tel qu'il vient d'être défini pour lequel l'un au moins de ses motifs glucose constitutifs est substitué, au moins en un endroit, par un' groupement ou une molécule qui peuvent être de taille et de fonctionnalité très diverses, comme par exemple un groupement alcoylé et notamment hydroxyalcoylé tel qu'un groupement hydroxypropyle ou par exemple une molécule de mono- ou di-saccharide telle qu'une molécule de maltose, glucose, fructose ou saccharose.

De préférence on met en oeuvre, dans le cadre de l'invention, une cyclodextrine choisie dans le groupe comprenant la béta-cyclodextrine et ses dérivés, l'alpha-cyclodextrine et ses dérivés, ainsi que les mélanges quelconques d'au moins deux quelconques de ces produits.

Lesdits mélanges pourront, à titre d'exemple, contenir conjointement et dans des proportions variables, chacun des trois types de cyclodextrines susmentionnées (alpha, béta et gamma) ainsi que, éventuellement, d'autres constituants tels que des dextrines linéaires et/ou d'autres structures saccharidiques plus ou moins complexes.

De façon tout à fait avantageuse, la cyclodextrine mise en oeuvre de façon caractéristique au sein des compositions selon l'invention est constituée essentiellement de béta-cyclodextrine et/ou de l'un de ses dérivés, en particulier hydroxyalcoylé.

Comme il a été dit précédemment, les compositions phytosanitaires selon l'invention présentent, de façon surprenante, un maximum d'efficacité pour les faibles ratios molaires cyclodextrine(s) / composé(s) benzamidique(s).

Selon un mode préférentiel de l'invention, ce rapport molaire se situe plus particulièrement entre 0,1/1 et 1/1.

Ces compositions pourront se présenter sous des formes solides ou liquides très diverses et, par exemple, sous forme de poudres mouillables, de suspensions concentrées, de bouillies, d'aérosols, de poudres pour poudrage ou dispersion, de solutions, de concentrés solubles dans l'eau, de concentrés émulsionnables, d'émulsions, etc.

La présence caractéristique d'au moins une cyclodextrine au sein de ces compositions, n'empêche aucunement que celles-ci puissent être adjuvantées à l'aide des produits habituellement utilisés en formulation tels que notamment les agents de support, les agents diluants ou solvants, les agents surfactants, les agents dispersants, les agents émulsifiants, les agents antigel, les colorants.

Il pourra être fait appel, par exemple, aux adjuvants décrits de la ligne 26 page 65 à la ligne 62 page 65 du brevet EP-A-0 049 071 susmentionné.

La Société Demanderesse a en outre mis en évidence la possibilité de mettre en oeuvre avantageusement de la gomme xanthane en tant qu'adjuvant, et notamment agent dispersant, desdites compositions.

De même, les compositions phytosanitaires selon l'invention pourront contenir, outre le(s) composé(s) benzamidique(s), une ou pÎusieurs autres matières actives, en particulier à vocation herbicide, fongicide, insecticide, nématicide ou bactéricide.

En particulier, la matière active benzamidique pourra être associée et ce, dans des proportions variables, à une ou pÎusieurs autres herbicides de toutes natures autres que benzamidique, et notamment choisis dans le groupe comprenant les triazines, les triazoles, les diazines, les toluidines, les dérivés de l'urée, les sulfonylurées, les benzonitriles, les amides, les dérivés benzoîques, phaliques, picoliniques ou phénoliques, et les carbamates.

De façon préférentielle, l'herbicide pouvant être associé à la matière active benzamidique sera choisi dans le groupe comprenant les produits connus sous les appellations de Diuron, Méthabenzthiazuron, Isoproturon, Linuron, Chlortoluron, Amétryne, Simazine, Trifluraline, Terbutryne, Propyzamide, Oxadiazon, Napropamide, Métazachlore, Alachlore et Prosulfocarb.

En ce qui concerne la méthode de préparation des compositions selon l'invention, celle-ci reste simple et ne nécessite aucunement de disposer d'appareillages et autres moyens techniques de mise en oeuvre coûteuse et/ou délicate. On s'attachera cependant à ce que cette préparation soit effectuée dans des conditions assurant au mieux l'obtention d'un mélange intime entre cyclodextrine(s) et composé(s) benzamidique(s).

On pourra, à titre d'exemple, préparer conjointement d'une part, une solution de composé benzamidique dans un solvant donné, par exemple une solution d'Isoxaben danbs de l'éthanol à 30%, et d'autre part une solution de cyclodextrine, par exemple de béta-cyclodextrine, dans le même dsolvant, puis mélanger entre elles les deux solutions ainsi obtenues.

On pourra également simplement mettre en oeuvre, sous forme de poudre, une cyclodextrine, notamment de la béta-cyclodextrine, au sein d'une composition de matière herbicide pré-formulée déjà existtante sur le marché telle que par exemple la formulation dénommée "Cent-7" à base d'Isoxaben commercialisée par la Société DOW ELANCO comme il sera exemplifié par ailleurs.

Les formulations commerciales auxquelles on ajoutera la cyclodextrine pourront bien évidemment associer, en proportions variables, un composé benzamidique tel que l'Isoxaben et au moins une autre matière active herbicide non benzamidique telles que celles susmentionnées.

Ces formulations pourront notamment être celles commercialisées par DOW ELANCO sous les appellations "Aubaine", "Ixo-7", "Sextan", "Crescendo", "Snapshot" ou "Flexidor", par CIBA-GEIGY sous les appellations "Fanfare" ou "Cibral" ou par BAYER sous l'appellation "Glytex".

En suite de quoi, on dispose désormais d'un procédé de préparation d'une composition phytosanitaire utile notamment pour la protection des plantes cultivées contre les espèces végétales indésirables, caractérisé en ce qu'il comprend une étape au cours de laquelle on met en présence l'un de l'autre, en présence ou non de tiers constituants, au moins un composé benzamidique à vocation herbicide et au moins une cyclodextrine, le rapport molaire cyclodextrine(s) / composé(s) benzamidique(s) étant au plus égal à 2/1.

En tout état de cause, quelle que soit la forme de présentation et/ou d'adjuvantation des compositions phytosanitaires selon l'invention, on dispose de nouveaux produits industriels présentant des avantages indéniables par rapport aux compositions phytosanitaires traditionnelles utilisant, en tant que matière active herbicide, unique ou non, au moins un composé benzamidique, en particulier un composé benzamidique classifiable d'immobile ou de peu mobile.

Les compositions selon l'invention permettent, comme il sera exemplifié ci-après, d'améliorer de façon surprenante l'efficacité desdits composés benzamidiques et par la-même de permettre, en regard des compositions de l'art antérieur, de sous-doser ces matières actives sans que l'efficacité du traitement phytosanitaire n'en soit atteinte.

A titre d'exemple, on pourra envisager la préparation et l'utilisation, y compris pour protéger les céréales, de compositions titrant moins de 125 g/l environ, notamment de 5 à 120 g/l de matière active et notamment d'Isoxaben.

D'un autre côté, les cyclodextrines sont issues de matières végétales renouvelables, à savoir de matières amylacées, et leur biodégradabilité et leur non-toxicité en font des produits parfaitement tolérées par l'environnement.

En suite de quoi on dispose désormais d'un nouveau procédé de traitement phytosanitaire, en vue notamment de protéger les plantes cultivées contre les espèces végétales indésirables, caractérisé par la mise en oeuvre, en post et/ou pré-levée des plantes à protéger, d'une composition phytosanitaire selon l'invention, celle-ci étant de préférence appliquée en surface et/ou à l'intérieur du substrat destiné à supporter ou supportant lesdites plantes.

Si l'utilisation des compositions selon l'invention s'impose tout particulièrement pour la protection des plantes cultivées qui, comme le mais, nécessitent un désherbage entre mai et la fin de l'été, il est clair que celles-ci peuvent, de manière générale, être avantageusement utilisées pour protéger l'ensemble des cultures qui, à une époque donnée, doivent être débarrassées de tout ou partie des mauvaises herbes présentes, en particulier celles de la classe des dicotylédones, et notamment être appliquées à l'ensemble des cultures céréalières (blé tendre, blé dur, orge, avoine, triticale, seigle, escourgeon), à la vigne et aux arbres et arbustes d'ornementation (les conifères par exemple).

Parmi les mauvaises herbes dicotylédones aptes à être efficacement détruites par la mise en oeuvre des compositions selon l'invention, on peut citer, sans que cette liste ne soit limitative, les espèces végétales indésirables appartenant aux familles des chénopodiacées, des amarantacées, des cruciféracées ou des solanacées.

De façon tout à fait avantageuse, on peut utiliser à cet effet, en particulier en prélevée des plantes à protéger, des compositions selon l'invention contenant de l'Isoxaben en tant que composé benzamidique, celui-ci pouvant éventuellement être associé à d'autres matières actives herbicides.

L'invention pourra être encore mieux comprise à l'aide des exemples qui suivent et qui font état de certains modes de réalisation particulièrement avantageux des compositions selon l'invention.

Les essais décrits ci-après ont pour objet de montrer l'intérêt de compositions selon l'invention associant une cyclodextrine, notamment la béta-cyclodextrine commercialisée par la Société Demanderesse sous l'appellation KLEPTOSE$^{R}$B, et l'Isoxaben en tant que composé benzamidique, ce dernier étant mis en oeuvre en tant que tel ou sous la forme d'une composition de matière herbicide préformulée (produit "CENT-7" commercialisé par la Société DOW ELANCO).

Il convient de préciser, comme rappelé précédemment, que la dose d'utilisation généralement recommandée pour l'Isoxaben, tout au moins pour la protection des céréales, est de 125 g à l'hectare (dose ci-après désignée dose N).

Dans le cadre de ces essais, réalisés pour le compte de la Société Demanderesse au sein du Laboratoire de Malherbologie de l'Institut National de la Recherche Agronomique (FRANCE), il a été décidé d'employer des doses inférieures à la dose N. De telles doses ne détruisent pas complètement les mauvaises herbes traitées et doivent permettre, en autorisant une activité herbicide a priori moyenne, de mieux déceler des gains ou pertes éventuels dans l'effet herbicide.

Des essais préliminaires ont ainsi permis de retenir les doses N/16 et N/8.

**EXEMPLE 1**

Des préparations non conformes à l'invention, à savoir ne contenant pas de façon caractéristique de cyclodextrine, ont été obtenues par mise en oeuvre respectivement de 125 et de 250 microlitres de formulation CENT-7 dans un litre d'eau.

Les teneurs respectives en matière active (Isoxaben) de ces préparations, ci-après désignées respectivement préparations T1 et T2, correspondent respectivement aux doses N/16 et N/8 susmentionnées.

Deux compositions selon l'invention, ci-après désignées respectivement I1 et I2, ont été préparées de la même façon si ce n'est que l'on a mis en oeuvre, conjointement à la formulation CENT-7 selon les proportions sus-décrites, respectivment 0,16 et 0,32 g/l de béta-cyclodextrine KLEPTOSE$^R$B.

En conséquence, les compositions selon l'invention I1 et I2 sont dosées respectivement en Isoxaben à N/16 et N/8 et présentent chacune un rapport molaire cyclodextrine / composé benzamidique de 6/1.

**Préparation du matériel végétal**

Dans le cadre de cet exemple, des graines d'amaranthe (Amaranthus albus) et de morelle (Solanum nigrum) prégermées sont utilisées en tant qu'espèces végétales indésirables. Il convient de rappeler que la morelle est une mauvaise herbe susceptible de coloniser, entre autres, le maïs.

Les graines sont mises à prégermer sur boîtes de pétri contenant de l'acide gibberellique $GA_3 10^{-4}$M.

Les graines de morelle sont soumises, en enceinte climatisée, à une alternance de 16 h de lumière à 25°C et 8 h d'obscurité à 20°C, jusqu'à germination.

Les graines d'amaranthe sont placées 16 h à la lumière à 22°C et 8 h d'obscurité à 14°C.

**Protocoles**

. Protocole A

Des pots en matière plastique sont remplis de 400 grammes d'un élange de terre (2/3) et de sable (1/3) tamisé à 2 mm. Ils sont ajustés à grammes pour 50% de capacité au champ (CC) et 480 grammes pour 100% de CC, cette notion de capacité au champ ou capacité de rétention correspondant au maximum d'eau que le sol peut retenir dans des conditions où son drainage se trouve librement assuré.

Une détermination expérimentale effectuée sur le sol utilisé en laboratoire, permet de préciser que les 100% de CC correspondent à une teneur en eau de la terre de 20%.

Les préparations T1, T2, I1 et I2 sont mises en agitation durant 30 minutes puis les pots sont traités à l'aide d'un pulvérisateur (pression : 2 bars).

Après le traitement, les graines sont plantées à raison de 10 par pot. L'essai est placé dans une enceinte climatisée où température et humidité subissent le cycle suivant : 16 heures de lumière à 60% d'humidité relative et 22°C, puis 8 heures d'obscurité à 80% d'humidité relative et 14°C. Les pots sont quotidiennement ramenés à 440 grammes et 480 grammes selon le taux de capacité au champ recherché, à l'aide d'une solution nutritive contenant, pour un litre :

- 10 ml de solution à 40 g/l de KNO3
- 13 ml de solution à 72 g/l de Ca (NO3)2, 4H20
- 15 ml de solution à 25 g/l de Mg SO4, 7H20
- 10 ml de solution à 18,4 g/l de NaH2 PO4, H20
- 1 ml d'une solution contenant :
    - 1,86 g/l H3 PO3
    - 1,69 g/l Mn SO4, H20
    - 0,25 g/l Cu SO4, S H20
    - 0,29 g/l Zn SO4, 7H20
    - 0,035 g/l (NH4)6 MO7, 024, 4H20
    - 0,045 g/l Al Cl3
    - 0,025 g/l COCl3, H20
- 3,6 ml d'une solution à 0,557 g/100 ml de Fe SO4, 7H2O et 0,745 g/100 ml d'EDTA.

L'évaluation des résultats est faite par récolte, au stade où la partie aérienne des plantes témoins (non traitées) comporte 2 feuilles vraies, puis mise à l'étuve à 80°C pendant 24 heures, des parties aériennes obtenues pour chaque traitement. Une pesée donne le poids de matière sèche ainsi récupérée.

. Protocole B

Ce protocole est mis uniquement en oeuvre sur morelle et dans un sol humidifié à 100% de sa capacité au champ. Les pots contiennent 30 morelles qui n'ont pas subi de prégermination et sont recouvertes d'une pellicule de terre.

L'expérience comporte cinq répétitions.

Les plantes sont récoltées au stade 4 feuilles vraies du témoin. L'évaluation des résultats se fait conformément au protocole A. On note, en outre, le pourcentage de levées de mauvaise herbe obtenu.

**Résultats**

Les résultats sont exprimés en pourcentage d'inhibition de la croissance de la mauvaise herbe cible, ce pourcentage étant déterminé par la formule ci-dessous :

$$\frac{\text{poids témoin non traité - poids essai}}{\text{poids témoin non traité}} \times 100$$

les poids étant ceux obtenus après passage à l'étuve comme décrit précédemment.

Le tableau I ci-après reprend le % d'inhibition de la croissance obtenu en fonction de la mauvaise herbe cible (amaranthe, morelle), de la préparation herbicide testée (préparations T1 et T2 non conformes à l'invention, compositions I1 et I2 conformes à l'invention), du protocole mis en oeuvre (protocoles A et B) et pour le protocole A, de la capacité au champ testé (50 ou 100%).

TABLEAU I

| espèce cible | protocole | capacité au champ | % inhibition | | | |
|---|---|---|---|---|---|---|
| | | | préparation herbicide | | | |
| | | | I1 | I2 | T1 | T2 |
| amaranthe | A | 50* | - | - | - | - |
| | A | 100 | 19 | 48 | 44 | 83 |
| morelle | A | 50 | 29 | 64 | 53 | 57 |
| | A | 100 | 73 | 65 | 73 | 78 |
| | B | 100** | 75 (10) | 84 (10) | 62 (6) | 87 (5) |

* Pour cet essai, l'ensemble des plantes, y compris celles non traitées (plantes témoins) ont présenté des difficultés à se développer. Les % d'inhibition, non significatifs, n'ont pas été reportés.

** Pour cet essai, les chiffres entre parenthèses indiquent les % de levées obtenus.

Il ressort globalement du Tableau I que les compositions selon l'invention I1 et I2 peuvent être valablement utilisées en tant que compositions herbicides, notamment lorsque le composé benzamidique est mis en oeuvre sous forme d'une composition de matière herbicide pré-formulée.

Il apparaît cependant que les compositions testées, lesquelles présentent un rapport molaire cyclodextrine / composé benzamidique élevé (6/1) ne permettent pas dans tous les cas d'obtenir des résultats significativement différents de ceux obtenus avec les préparations témoins T1 et T2 qui présentent la même concentration en herbicide benzamidique.

Des tests supplémentaires réalisés selon le protocole A (CC à 100%) sur graines d'amaranthe prégermées mais en utilisant un dérivé de béta-cyclodextrine, en l'occurence une béta-cyclodextrine hydroxypropylée préparée par la Société Demanderesse, en tant que cyclodextrine mise en oeuvre dans les compositions selon l'invention, ont permis d'arriver aux mêmes conclusions générales que ci-dessus quant à l'intérêt phytosanitaire desdites compositions.

**EXEMPLE 2**

Dans le cadre de ces essais, on apprécie sur morelle (graines prégermées) l'efficacité de compositions phytosanitaires selon l'invention présentant des rapports molaires cyclodextrine / composé benzamidique peu élevés, à savoir au plus égaux au rapport 2/1 et notamment compris entre 1/1 et 0,125/1.

La cyclodextrine mise en oeuvre dans les compositions selon l'invention est la béta-cyclodextrine KLEPTOSE$^R$B commercialisée par la Société Demanderesse. Le composé benzamidique (Isoxaben) est mis en oeuvre en tant que tel ou apporté sous la forme de préparation CENT-7.

La dose retenue en Isoxaben, pour l'ensemble des préparations testées (préparations témoins ou conformes à l'invention) est la dose N/16 définie ci-avant.

**Préparation du matériel végétal**

Les essais se déroulent dans une enceinte climatisée sous une alternance 16 h de lumière (température 22°C, humidité relative 60%) et 8h d'obscurité (14°C, 80%). Les pots sont quotidiennement ramenés à la teneur en eau correspondant à la capacité de rétention au champ.

**Préparation des compositions selon l'invention**

. Protocole A : mise en oeuvre de l'Isoxaben en tant que tel

Des solutions d'Isoxaben dans l'éthanol 96% (1,56 g/l) et de béta-cyclodextrine dans l'éthanol 30% (5,34 g/l) sont mélangées dans de l'éthanol 30%, dans des proportions telles que les rapports molaires cyclodextrine / composé benzamidique ci-après sont obtenus : 2/1, 1/1, 0,5/1, 0,25/1 et 0,125/1.

10 ml du mélange final dilués dans 500 ml d'eau contenant de la gomme xanthane 0,1% et appliqués à raison de 500 l/ha correspondent à une dose N/16 d'Isoxaben (7,8 g/ha).

. Protocole B : mise en oeuvre de l'Isoxaben sous forme préformulée

Des préparations sont obtenues par mise en oeuvre de CENT-7 dans de l'eau à raison de 125 microlitres CENT-7/l et ainsi, dosées en Isoxaben à N/16.

Ces préparations sont rendues conformes à l'invention par mise en oeuvre de béta-cyclodextrine KLEPTOSE$^R$B en vue d'obtenir respectivement des rapports molaires cyclodextrine / composé benzamidique de 6/1, 2/1, 1/1, 0,5/1, 0,25/1 et 0,125/1.

**Essais de croissance**

Pour ces essais, les pots sont traités juste avant le repiquage.

Des graines de morelle sont mises à germer sur du papier humide sous une alternance 16 h de lumière (température 25°C), et 8 h d'obscurité (20°C). Les graines germées sont plantées (3 x 10 par modalité) dans des pots remplis d'un mélange (tamisé à 2 mm) terre / sable (2/1) ajusté en eau à la capacité de rétention au champ. La terre comprend 32% d'argile et 2,3 de matières organiques. Après le traitement, l'essai est placé dans l'enceinte climatisée. Lorsque les plantes témoin atteignent le stade 2 feuilles vraies, les parties aériennes sont récoltées et placées dans une étuve à 80°C pendant 24 h pour détermination du poids de matière sèche.

**Essais de levée**

Pour ces esssais, les pots sont traités juste après le semis.

3 x 100 graines de morelle sont semées à une profondeur 1 à 3 mm dans le mélange décrit plus haut. Après le traitement, l'essai est placé dans l'enceinte climatisée et le nombre de plantes levées est compté dans la dizaine de jours qui suit.

Tous les essais comprennent 3 répétitions, un témoin et une référence CENT-7 à la même dose/ha que l'Isoxaben contenu dans les préparations selon l'invention.

**Résultats**

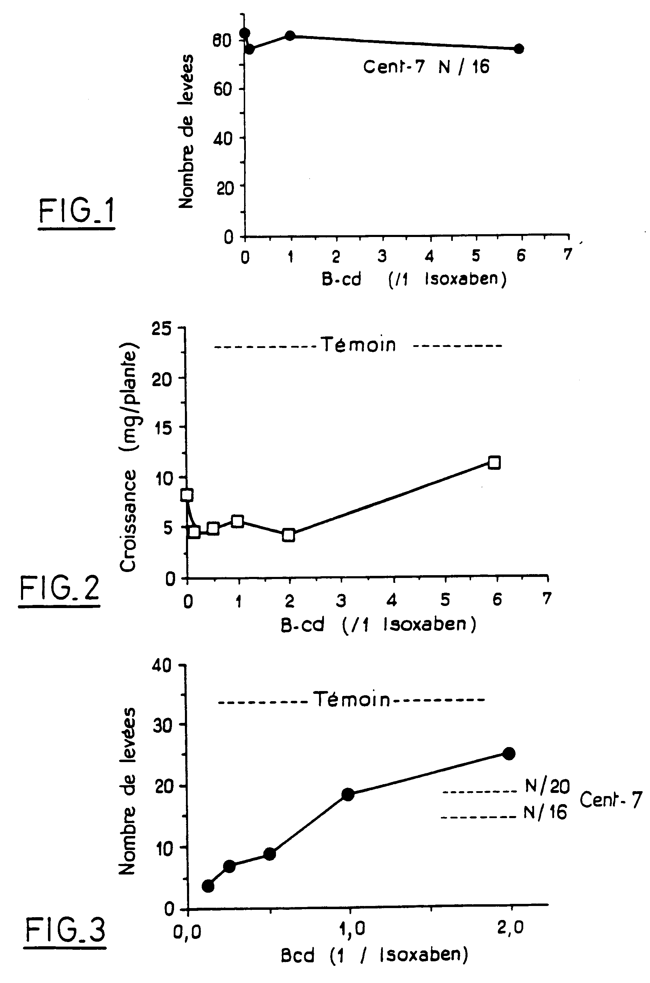

La figure 1 annexée fait apparaître le nombre de levées obtenues pour la mauvaise herbe cible (morelle) en fonction du rapport béta-cyclodextrine / Isoxaben de la préparation herbicide testée.

Comme il a été décrit précédemment, les préparations testées sont dosées à N/16 en Isoxaben, celui-ci étant apporté sous forme CENT-7 (cf. protocole B sus-décrit).

Le point d'abcisse 0 montre le nombre de levées obtenu pour la préparation témoin CENT-7, ne contenant pas de cyclodextrine.

Il ressort de la figure 1 que les compositions conformes à l'invention sont, en termes de nombre de levées de mauvaise herbe, au moins aussi efficaces que la préparation exempte de cyclodextrine.

La figure 2 annexée fait apparaître la croissance de la mauvaise herbe cible (morelle), exprimée en mg/plante en fonction du rapport béta-cyclodextrine / isoxaben de la préparation herbicide testée.

Les préparations testées sont dosées à N/16 en Isoxaben, celui-ci étant apporté sous forme CENT-7 (cf. protocole B).

Le point d'abcisse 0 montre la croissance obtenue pour la préparation témoin CENT-7, ne contenant pas de cyclodextrine.

Un essai témoin pour lequel la morelle n'a subi aucun traitement herbicide montre que, dans ce cas, la croissance de la morelle est d'environ 23 mg/plante.

La figure 2 confirme que l'ensemble des compositions selon l'invention testées peuvent être valablement utilisées en tant que produits phytosanitaires herbicides.

En outre, il ressort que, globalement, la mise en oeuvre de cyclodextrine, en particulier de béta-cyclodextrine, pour des rapports cyclodextrine / composé benzamidique inférieurs au rapport molaire 2/1 environ, permet d'atteindre une efficacité significativement supérieure à celle de la préparation témoin exempte de cyclodextrine, en termes d'inhibition de la croissance moyenne de l'espèce cible.

Des essais supplémentaires réalisés avec des compositions selon l'invention préparées selon le protocole A susdécrit (Isoxaben apporté en tant que tel et non sous forme préformulée) ont permis de tirer les mêmes conclusions que ci-dessus, notamment en ce qui concerne l'intérêt de compositions présentant un rapport molaire béta-cyclodextrine / composé benzamidique se situant entre 0,125/1 et 1/1 environ. A titre d'exemple, de telles compositions ont permis de réduire de 2/3 à 4/5 environ la croissance de la mauvaise herbe cible (morelle).

## EXEMPLE 3

Dans le cadre de ces essais, l'efficacité des compositions selon l'invention est testée sur le colza (<u>Brassica napus</u>) dont la particularité est de germer relativement profondément en regard de ce qui se passe pour la morelle. Des herbicides de faible mobilité dans le sol auront donc encore plus de difficultés à l'atteindre efficacement. En outre, cette germination profonde présente l'avantage d'échapper au stimulus lumineux éventuel pouvant dans un contexte de faible dosage favoriser la levée de la mauvaise herbe.

### Préparation du matériel végétal

Dans le cas du colza, les conditions de croissance sont 16 h de lumière à une température de 19°C et une humidité de 60% et 8 h d'obscurité à 9°C et 80%.

Les pots sont quotidiennement ramenés à la teneur en eau correspondant à la capacité de rétention au champ.

### Préparation des compositions selon l'invention

Elle se fait conformément au protocole A décrit au niveau de l'exemple 2, en vue d'obtenir des compositions présentant des rapports molaires cyclodextrine / composé benzamidique respectifs de 2/1, 1/1, 0,5/1, 0,25/1 et 0,125/1, lesdites compositions étant dosées a N/16 en Isoxaben.

Dans le cas présent, deux préparations témoins mettant en oeuvre de l'Isoxaben formulé en CENT-7 ont été testées et ce pour des doses respectives en matière active de N/16 et N/20.

### Essais de levée

Dans le cas du colza, les conditions expérimentales sont identiques à celles décrites ci-avant pour la morelle, mis à part le nombre de graines semées (3 x 33), le rapport terre / sable (1/2) et les conditions de croissance (décrites ci-avant).

### Résultats

La figure 3 annexée fait apparaître le nombre de levées obtenues pour la mauvaise herbe cible (colza) en fonction du rapport béta-cyclodextrine / isoxaben de la préparation herbicide testée.

Elle confirme sur une troisième espèce cible l'intérêt des compositions selon l'invention lesquelles peuvent, comme dans le cas présent, consister en des formulations simples associant principalement cyclodextrine, composé benzamidique, eau et agent dispersant (gomme xanthane).

En particulier, les compositions selon l'invention présentant un rapport cyclodextrine / composé benzamidique inférieur à 2/1 et notamment compris entre 1/1 et 0,125/1 environ, se révèlent significativement plus efficaces qu'une composition herbicide témoin entièrement formulée.

## Revendications

1. Composition phytosanitaire, utile notamment pour la protection des plantes contre les espèces végétales indésirables, caractérisée en ce qu'elle contient au moins un composé benzamidique associé à au moins une cyclodextrine de manière à améliorer la mobilité dans le sol et/ou l'efficacité biologique dudit dérivé benzamidique et en ce que le rapport molaire entre cyclodextrine(s) d'une part et composé(s) benzamidique d'autre part est au plus égal à 2/1.

2. Composition phytosanitaire selon la revendication 1, caractérisée en ce que le rapport molaire se situe de préférence entre 0,1/1 et 1/1.

3. Composition phytosanotaire selon l'une des revendications 1 et 2, caractérisée en ce que le composé benzamidique est un composé N-arylbenzamidique, en particulier N-aryl-alcoxy benzamidique.

4. Composition phytosanitaire selon la revendication 3, caractérisée par le fait que le composé N-aryl-alcoxy benzamidique est le N-[3-(1-éthyl-1-méthylpropyl)-5-isoxazolyl]-2,6-diméthoxybenzamide ou Isoxaben, ou l'un de ses sels.

5. Composition phytosanitaire selon l'une des revendication 1 à 4, caractérisée par le fait que le composé benzamidique est, en tant que tel, un produit immobile ou faiblement mobile dans le sol.

6. Composition phytosanitaire selon l'une des revendications 1 à 5, caractérisée par le fait que la cyclodextrine est choisie dans le groupe comprenant la béta-cyclodextrine et ses dérivés, l'alpha-cyclodextrine et ses dérivés, ainsi que les mélanges quelconques d'au moins deux quelconques de ces produits.

7. Composition phytosanitaire selon la revendication 6, caractérisée par le fait que la cyclodextrine est constituée essentiellement de béta-cyclodextrine et/ou de l'un de ses dérivés, en particulier hydroxyalcoylé.

8. Composition phytosanitaire selon l'une des revendications 1 à 7, caractérisée par le fait qu'elle contient, en outre, au moins un adjuvant choisi dans le groupe comprenant les agents de support, les agents diluants, les agents solvants, les agents dispersants, les agents surfactants, les agents émulsifiants, les agents anti-gel, les agents colorants, et/ou au moins une matière active choisie dans le groupe comprenant les herbicides de nature non benzamidique, les fongicides, les insecticides, les nématicides et les bactéricides.

9. Composition phytosanitaire selon la revendication 8, caractérisée par le fait que la matière active est un herbicide de nature non benzamidique choisi dans le groupe comprenant les triazines, les triazoles, les diazines, les toluidines, les dérivés de l'urée, les sulfonylurées, les benzonitriles, les amides, les dérivés benzoïques, les dérivés phtaliques, les dérivés picoliniques, les dérivésphénoliques et les carbamates, et en particulier, choisi parmi les produits connus sous les appellations de Diuron, Methabenzthiazuron, Isoproturon, Linuron, Chlortoluron, Amétryne, Simazine, Trifluraline, Terbutryne, Propyzamide, Oxadiazon, Napropamide, Métazachlore, Alachlore et Prosulfocarb.

10. Composition selon l'une des revendications 8 ou 9, caractérisée en ce qu'elle contient de la gomme xanthane.

11. Composition phytosanitaire selon l'une des revendications 1 à 10, caractérisée par le fait qu'elle contient moins de 125 g/l environ, en particulier de 5 à 120 g/l, de composé(s) benzamidique(s).

12. Procédé de préparation d'une composition phytosanitaire utile notamment pour la protection des plantes contre les espèces végétales indésirables, caractérisé par le fait qu'il comprend une étape au cours de laquelle on met en présence l'un de l'autre, en présence ou non de tiers constituants, au moins un composé benzamidique à vocation herbicide, notamment de l'Isoxaben, et au moins une cyclodextrine, en particulier la béta-cyclodextrine, le rapport molaire cyclodextrine(s) / composé(s) benzamidique(s) étant inférieur à 2/1, et de préférence compris entre 0,1/1 et 1/1.

13. Procédé selon la revendication 12, caractérisé par le fait que lors de ladite étape, le composé benzamidique est mis en oeuvre sous la forme d'une composition de matière herbicide pré-formulée.

14. Procédé de traitement phytosanitaire, en vue notamment de protéger les plantes contre les espèces végétales indésirables, caractérisé par le fait que l'on utilise, en post et/ou pré-levée des plantes à protéger, une composition phytosanitaire selon l'une des revendications 1 à 11 ou préparée selon les revendications 12 ou 13, ladite composition étant de préférence appliquée en surface et/ou à l'intérieur du substrat destiné à supporter ou supportant lesdites plantes.

15. Procédé de traitement phytosanitaire selon la revendication 14, caractérisé par le fait que les plantes à protéger sont choisies dans le groupe comprenant les céréales, en particulier le maïs et les céréales d'hiver, la vigne et les arbres et arbustes d'ornementation, en particulier les conifères.

16. Procédé de traitement phytosanitaire selon l'une des revendications 14 et 15, caractérisé par le fait que tout ou partie des espèces végétales indésirables sont des dicotylédones, en particulier appartenant aux familles des chénopodiacées, des amarantacées, des cruciféracées et des solanacées.

17. Procédé de traitement phytosanitaire selon l'une des revendications 14 à 16, caractérisé par le fait que l'on utilise, en pré-levée des plantes à protéger, une composition contenant de la béta-cyclodextrine et de l'Isoxaben.

**Claims**

1. Plant protection composition, useful especially for protecting plants against undesirable plant species, characterised in that it contains at least one benzamide compound in combination with at least one cyclodextrin so as to improve the mobility in the soil and/or the biological effectiveness of the said benzamide derivative, and in that the molar ratio of cyclodextrin(s), on the one hand, to benzamide compound(s), on the other hand, is not more than 2/1.

2. Plant protection composition according to Claim 1, characterised in that the molar ratio is preferably between 0.1/1 and 1/1.

3. Plant protection composition according to one of Claims 1 and 2, characterised in that the benzamide compound is an N-arylbenzamide compound, in particular an N-aryl alkoxybenzamide compound.

4. Plant protection composition according to Claim 3, characterised in that the N-aryl alkoxybenzamide compound is N-[3-(1-ethyl-1-methylpropyl)-5-isoxazolyl]-2,6-dimethoxybenzamide or Isoxaben, or one of its salts.

5. Plant protection composition according to one of Claims 1 to 4, characterised in that the benzamide compound is, as such, a product which is immobile or weakly mobile in the soil.

6. Plant protection composition according to one of Claims 1 to 5, characterised in that the cyclodextrin is chosen from the group comprising beta-cyclodextrin and its derivatives, alpha-cyclodextrin and its derivatives, as well as any mixtures whatsoever containing at least any two of these products.

7. Plant protection composition according to Claim 6, characterised in that the cyclodextrin consists essentially of beta-cyclodextrin and/or of one of its derivatives, in particular hydroxyalkylated.

8. Plant protection composition according to one of Claims 1 to 7, characterised in that it additionally contains at least one adjuvant chosen from the group comprising vehicles, diluting agents, solvents, dispersing agents, surfactants, emulsifying agents, antifreezes and dyes, and/or at least one active material chosen from the group comprising herbicides of non-benzamide nature, fungicides, insecticides, nematocides and bactericides.

9. Plant protection composition according to Claim 8, characterised in that the active material is a herbicide of non-benzamide nature chosen from the group comprising triazines, triazoles, diazines, toluidines, urea derivatives, sulphonylureas, benzonitriles, amides, benzoic derivatives, phthalic derivatives, picolinic derivatives, phenolic derivatives and carbamates, and, in particular, chosen from the products known under the names Diuron, Metabenzthiazuron, Isoproturon, Linuron, Chlortoluron, Ametryn, Simazine, Trifluralin, Terbutryn, Propyzamide, Oxadiazon, Napropamide, Metazachlor, Alachlor and Prosulfocarb.

10. Composition according to one of Claims 8 or 9, characterised in that it contains xanthan gum.

11. Plant protection composition according to one of Claims 1 to 10, characterised in that it contains less than approximately 125 g/l, in particular from 5 to 120 g/l, of benzamide compound(s).

12. Process for the preparation of a plant protection composition useful especially for protecting plants against undesirable plant species, characterised in that it comprises a stage during which at least one benzamide compound possessing herbicidal activity, especially Isoxaben, and at least one cyclodextrin, in particular beta-cyclodextrin, are brought together, in the presence or absence of third constituents, the cyclodextrin(s)/benzamide compound(s) molar ratio being less than 2/1, and preferably between 0.1/1 and 1/1.

13. Process according to Claim 12, characterised in that, during the said stage, the benzamide compound is used in the form of a preformulated herbicidal active material composition.

14. Process for plant protection treatment, especially for the purpose of protecting plants against undesirable plant species, characterised in that, in post- and/or preemergence of the plants to be protected, a plant protection composition according to one of Claims 1 to 11 or prepared according to Claims 12 or 13 is used, the said composition preferably being applied to the surface and/or inside the substrate intended to support or supporting the said plants.

15. Process for plant protection treatment according to Claim 14, characterised in that the plants to be protected are chosen from the group comprising cereals, in particular maize and winter cereals, vines and ornamental trees and shrubs, particularly conifers.

16. Process for plant protection treatment according to one of Claims 14 and 15, characterised in that all or part of the undesirable plant species are dicotyledons, in particular belonging to the chenopodiaceae, amaranthaceae, cruciferae and solanaceae families.

17. Process for plant protection treatment according to one of Claims 14 to 16, characterised in that a composition containing beta-cyclodextrin and Isoxaben is used in preemergence of the plants to be protected.

**Patentansprüche**

1. Pflanzenschutz-Zusammensetzung, die insbesondere zum Schützen von Pflanzen gegen unerwünschte Pflanzenarten geeignet ist, dadurch gekennzeichnet, daß sie mindestens eine Benzamid-Verbindung in Kombination mit mindestens einem Cyclodextrin enthält, um die Mobilität im Erdboden und/oder die biologische Wirksamkeit des genannten Benzamid-Derivats zu verbessern, und daß das Molverhältnis zwischen dem(den) Cyclodextrin(en) einerseits und der(den) Benzamid-Verbindung(en) andererseits höchstens 2:1 beträgt.

2. Pflanzenschutz-Zusammensetzung nach Anspruch 1, dadurch gekennzeichnet, daß das Molverhältnis vorzugsweise zwischen 0,1:1 und 1:1 liegt.

3. Pflanzenschutz-Zusammensetzung nach einem der Ansprüche 1 und 2, dadurch gekennzeichnet, daß die Benzamid-Verbindung eine N-Arylbenzamid-Verbindung, insbesondere eine N-Aryl-alkoxy-benzamid-Verbindung, ist.

4. Pflanzenschutz-Zusammensetzung nach Anspruch 3, dadurch gekennzeichnet, daß es sich bei der N-Aryl-alkoxy-benzamid-Verbindung handelt um N-[3-(1-Ethyl-1-methylpropyl)-5-isoxazolyl]-2,6-dimethoxybenzamid oder Isoxaben oder eines seiner Salze.

5. Pflanzenschutz-Zusammensetzung nach einem der Ansprüche 1 bis 4, dadurch gekennzeichnet, daß die Benzamid-Verbindung als solche ein im Erdboden unbewegliches oder wenig bewegliches Produkt ist.

6. Pflanzenschutz-Zusammensetzung nach einem der Ansprüche 1 bis 5, dadurch gekennzeichnet, daß das Cyclodextrin ausgewählt wird aus der Gruppe, die umfaßt β-Cyclodextrin und seine Derivate, α-Cyclodextrin und seine Derivate sowie beliebige Gemische von mindestens zwei beliebigen dieser Produkte.

7. Pflanzenschutz-Zusammensetzung nach Anspruch 6, dadurch gekennzeichnet, daß das Cyclodextrin im wesentlichen besteht aus β-Cyclodextrin und/oder einem seiner Derivate, insbesondere einem seiner Hydroxyalkyl-Derivate.

8. Pflanzenschutz-Zusammensetzung nach einem der Ansprüche 1 bis 7, dadurch gekennzeichnet, daß sie außerdem enthält mindestens ein Adjuvans, ausgewählt aus der Gruppe, die umfaßt Trägermittel, Verdünnungsmittel, Lösungsmittel, Dispergiermittel, oberflächenaktive Mittel, Emulgiermittel, Antigelierungsmittel, Färbemittel und/oder mindestens ein aktives Material, ausgewählt aus der Gruppe, die umfaßt Herbizide vom Nicht-Benzamid-Typ, Fungizide, Insektizide, Nematozide und Bakterizide.

9. Pflanzenschutz-Zusammensetzung nach Anspruch 8, dadurch gekennzeichnet, daß das aktive Material (der Wirkstoff) ein Herbizid vom Nicht-Benzamid-Typ ist, das ausgewählt wird aus der Gruppe, die umfaßt Triazine, Triazole, Diazine, Toluidine, Harnstoffderivate, Sulfonylharnstoffe, Benzonitrile, Amide, Benzoesäure-Derivate, Phthalsäurederivate, Picolinsäurederivate, Phenolderivate und Carbamate, und das insbesondere ausgewählt wird unter den Produkten, die unter den Bezeichnungen Diuron, Metabenzthiazuron, Isoproturon, Linuron, Chlortoluron, Ametryn,

Simazin, Trifluralin, Terbutryn, Propyzamid, Oxadiazon, Napropamid, Metazachlor, Alachlor und Prosulfocarb bekannt sind.

**10.** Zusammensetzung nach einem der Ansprüche 8 oder 9, dadurch gekennzeichnet, daß sie Xanthan-Gummi enthält.

**11.** Pflanzenschutz-Zusammensetzung nach einem der Ansprüche 1 bis 10, dadurch gekennzeichnet, daß sie weniger als etwa 125 g/l, insbesondere 5 bis 120 g/l, Benzamid-Verbindung(en) enthält.

**12.** Verfahren zur Herstellung einer Pflanzenschutz-Zusammensetzung, die insbesondere zum Schützen von Pflanzen gegen unerwünschte Pflanzenarten verwendbar ist, dadurch gekennzeichnet, daß es eine Stufe umfaßt, in deren Verlauf man in Gegenwart oder Abwesenheit dritter Bestandteile miteinander in Kontakt bringt mindestens eine Benzamid-Verbindung als Herbizid, insbesondere Isoxaben, und mindestens ein Cyclodextrin, insbesondere β-Cyclodextrin, wobei das Molverhältnis zwischen Cyclodextrin(en) und Benzamid-Verbindung(en) unterhalb 2:1, vorzugsweise zwischen 0,1:1 und 1:1, liegt.

**13.** Verfahren nach Anspruch 12, dadurch gekennzeichnet, daß in der genannten Stufe die Benzamid-Verbindung in Form einer vorformulierten Herbizidmaterial-Zusammensetzung eingesetzt wird.

**14.** Verfahren zur Pflanzenschutz-Behandlung, insbesondere zum Schützen von Pflanzen gegen unerwünschte Pflanzenarten, dadurch gekennzeichnet, daß man nach und/oder vor dem Auflaufen der zu schützenden Pflanzen eine Pflanzenschutz-Zusammensetzung nach einem der Ansprüche 1 bis 11, oder hergestellt nach den Ansprüchen 12 oder 13, verwendet, wobei die Zusammensetzung vorzugsweise auf die Oberfläche und/oder in das Innere des Substrats angewendet wird, das dazu bestimmt ist, die Pflanzen zu tragen oder das die Pflanzen trägt.

**15.** Verfahren zur Pflanzenschutz-Behandlung nach Anspruch 14, dadurch gekennzeichnet, daß die zu schützenden Pflanzen ausgewählt werden aus der Gruppe von Getreide, insbesondere Mais und Wintergetreide, Wein und Zier-Bäumen und -Sträuchern, insbesondere den Koniferen.

**16.** Verfahren zur Pflanzenschutz-Behandlung nach einem der Ansprüche 14 und 15, dadurch gekennzeichnet, daß sämtliche oder ein Teil der unerwünschten Pflanzenarten Dicotyledonen sind und insbesondere den Familien der Chenopodiazeen, der Amarantazeen, der Cruciferazeen und der Solanazeen angehören.

**17.** Verfahren zur Pflanzenschutz-Behandlung nach einem der Ansprüche 14 bis 16, dadurch gekennzeichnet, daß man vor dem Auflaufen der zu schützenden Pflanzen eine Zusammensetzung verwendet, die β-Cyclodextrin und Isoxaben enthält.

FIG.1

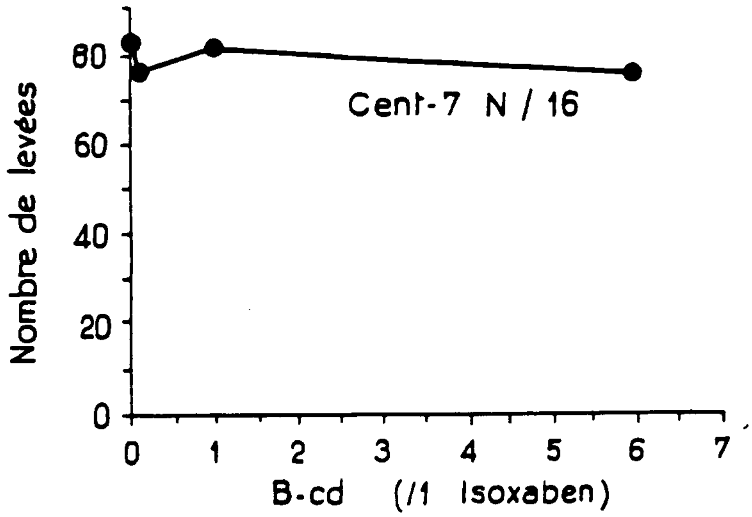


FIG.2

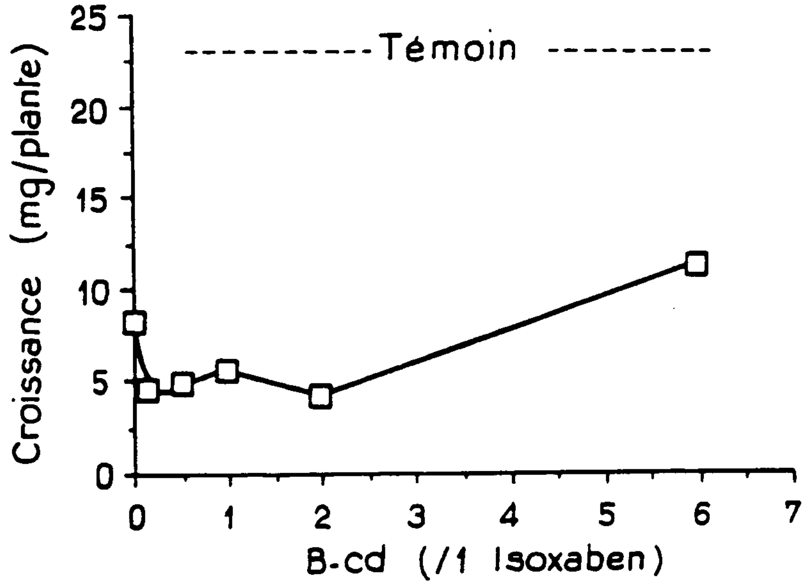


FIG.3